# EUROPEAN PATENT APPLICATION

(11) **EP 4 311 730 A1**
(43) Date of publication of application: **31.01.2024**
(21) Application number: 22186652.8
(22) Date of filing: 25.07.2022
(51) Int. Cl.: B60R 19/18

(54) **CRASH MANAGEMENT SYSTEM FOR A MOTOR VEHICLE**

(71) Applicant: Constellium Singen GmbH, 78224 Singen (DE)
(72) Inventor: WIEDEMANN, Jochen, 78315 RADOLFZELL (DE); SCHMID, Thomas, 78315 RADOLFZELL (DE); BRAUNER, Jambolka, 78224 SINGEN (DE); HOETZ, Joerg, 78234 ENGEN (DE); KLEINDICK, Tim, 78224 SINGEN (DE); BOEHLER, Patrick, 78464 KONSTANZ (DE)
(74) Representative: Constellium - Propriété Industrielle

(57) **Abstract**

The invention relates to a crash management system (100) for a motor vehicle, the crash management system (100) comprising a crossbeam (10; 10a to 10g) for being connected to a body shell structure of the motor vehicle, the crossbeam (10 ; 10a to 10g) comprising a front flange (16; 26e), a rear flange (14; 14d) and at least two transverse walls (18, 20; 20c) connecting the front flange (16; 26e) to the rear flange (14; 14d) in order to form a closed cross section of the crossbeam, (10; 10a to 10e), at least one partition wall (26; 26a to 26d; 26f; 26g) extending at least approximately parallel to the front flange (16; 26e) and/or to the rear flange (14; 14d) being disposed between the front flange (16; 26e) and the rear flange (14; 14d) the crash management system (100) also comprising at least one dividing wall (28; 28b; 28f; 35; 35f; 36; 36b; 36f; 53; 59a to 59d; 64a to 64f) protruding from the front flange (16; 26e) or the rear flange (14; 14d) in the direction of the at least one partition wall (26; 26a to 26d; 26f; 26g) and being connected to the at least one partition wall (26; 26a to 26d; 26f; 26g) at a joint (44, 46, 48; 52; 57; 61; 65; 79 to 81), said dividing wall (28; 28b; 28f; 35; 35f; 36; 36b; 36f; 53; 59a to 59d; 64a to 64f) separating two closed chambers (32, 38, 40, 42; 49, 51; 55, 56; 58a to 58f; 60a to 60c; 62a to 62e; 72, 74, 76, 78; 85, 86) from one another within the cross section of the crossbeam (10; 10a to 10g).

## Description

### FIELD OF THE INVENTION

The invention relates to a crash management system for a vehicle which is characterized by particularly advantageous properties in particular in tests in which the vehicle collides with a pole-type obstacle, namely by the fact that the crossbeam has a particularly high strength viewed in the longitudinal direction.

### BACKGROUND

A crash management system for a motor vehicle having the features of the preamble of claim 1 is known from DE 10 2008 051 597 A1. Due to the offset arrangement of dividing walls disposed parallel to the transverse walls, the known crash management system has the property that the partition walls extending parallel to the front flange and to the rear flange of the crossbeam buckle or are deformed at a defined point in the event of a collision. While the wall thickness of the front flange and of the rear flange of the cross sections of the crossbeam is the same, the wall thickness of the dividing wall increases in the direction of the rear flange. It is also essential that the number of chambers of the cross sections of the crossbeam limited by the dividing walls and the partition walls on the side facing the front flange is higher than in the direction of the rear flange.

Furthermore, a reinforcing element disposed in a middle area of the crossbeam and having a plurality of honeycomb-shaped openings on the end face facing the front flange of the crossbeam is known from JP 2015-147437 A. A reinforcing element of this kind can only be produced by a relatively elaborate casting process, for example.

Last, it is known from DE 102019 101 718 A1 for additional struts to be used between the crash boxes and the crossbeam in particular in electric vehicles in order to improve the crash behavior against a pole-type obstacle, the struts connecting the crash boxes to the crossbeam on their outer sides facing away from each other.

### DESCRIPTION OF THE INVENTION

The crash management system for a motor vehicle according to the invention having the features of claim 1 has the advantage that it prevents or delays the crossbeam from being torn apart in particular in the context of crash tests in which the crossbeam collides with a pole-type obstacle centrally or with a lateral offset. Such a breaking apart of the crossbeam in the event of a collision is critical in particular in the context of electric vehicles, where there typically is no motor block or a similar solid element which delays or decelerates the movement of the obstacle in the direction of the passenger compartment in the area of the front. Furthermore, the crash management system according to the invention does not require an additional or separate reinforcing element which is connected to the crossbeam.

The invention is based on the idea that, in addition to an advantageous offset arrangement of the dividing walls in the cross section of the crossbeam, an arrangement of the neutral axis as close as possible to the rear flange in a direction extending from the rear flange to the front flange is also advantageous. The result of such an arrangement of the neutral axis, which is the geometric center of mass (or gravity) of the cross section of the crossbeam, is that in the event of a collision, the tensile stress acting on the material is reduced in the direction of the rear flange, which prevents the crossbeam from being torn apart.

Hence, in view of the explanations above, a crash management system for a motor vehicle according to the invention having the features of claim 1 provides that a neutral axis of the area cross section of the crossbeam is disposed in a range between 20 % and 45 % of the depth of the crossbeam in a direction extending from the rear flange in the direction of the front flange.

Advantageous embodiments of the crash management system for a motor vehicle according to the invention are indicated in the dependent claims.

In a preferred arrangement of the neutral axis, said neutral axis is disposed in a range between 30 % and 40 % of the depth of the crossbeam in a direction extending from the rear flange in the direction of the front flange.

Particularly preferably, the wall thickness of the rear flange is greater than the wall thickness of the front flange. Preferably, the wall thickness of the rear flange is at least twice, particularly preferably approximately at least three times the wall thickness of the front flange. Such a ratio of the wall thicknesses of the front flange and the rear flange makes it possible in a particularly simple manner to displace the neutral axis in the direction of the rear flange.

Another preferred configuration of the crossbeam provides that several chambers are disposed on both sides of the at least one partition wall in a direction extending parallel to the front flange and/or to the rear flange. This allows the deformation behavior of the crossbeam to be influenced particularly well or in a precisely defined manner.

A preferred embodiment of several of such chambers provides that the dividing walls separating the chambers from one another are offset to one another in a direction extending parallel to the front flange and/or to the rear flange. In other words, this means that overall the chambers are all offset to one another.

With respect to the number of chambers, different options are available. The number of chambers disposed on both sides of the at least one partition wall can be different, namely preferably in such a manner that their number is different by one or by one chamber.

An embodiment of such a configuration provides that the number of chambers on the side facing the rear flange is greater than the number of chambers on the side facing the front flange. Similar to a greater wall thickness of the rear flange, such a greater number of chambers advantageously allows the neutral axis to be displaced in the direction of the rear flange.

Alternatively, however, it is also possible that the number of chambers disposed on both sides of the at least one partition wall is the same.

With respect to the geometric design of the dividing walls separating the chambers from one another, different options are available as well. In a first configuration, it is conceivable that at least one of the dividing walls is plane and is disposed parallel to at least one transverse wall. Alternatively or additionally, at least one of the dividing walls can comprise a curved section or a section extending at an oblique angle to a partition wall, the oblique section or the curved section ending at the joint.

In a particularly preferred configuration of the dividing walls, at least one of the dividing walls is arched, the curvature protruding to the side having a smaller distance to the transverse wall. In the event of a collision, such an arched dividing wall allows an intended deformation of the dividing wall in the direction of the respective transverse wall.

Additionally, configurations of the crossbeams are conceivable in which the height of the front flange and the height of the rear flange are different. This can be done, for example, by additional moldings on the front flange disposed outside the otherwise closed cross section of the crossbeam, or alternatively by additional chambers on the upper side or the lower side of the cross section of the crossbeam, the additional chambers not extending across the entire width of the crossbeam.

Alternatively, it is also conceivable that the cross section of the crossbeam is rectangular. In other words, this means that the height of the front flange and the height of the rear flange are at least approximately the same.

Another option to influence the deformation behavior is that a wall thickness of the partition wall is smaller than the wall thickness of the dividing wall.

With respect to the dimensioning of the chambers, it can also be advantageous if the width of the chambers disposed on both sides of the partition wall is the same.

A crash management described above or its crossbeam, which can be connected to the body shell structure of the motor vehicle via crash boxes, can preferably be produced by extrusion, the crossbeam being made of aluminum or an aluminum alloy.

Other advantages, features and details of the invention are apparent from the following description of preferred embodiments of the invention and from the drawings.

### DESCRIPTION OF THE DRAWINGS

- Fig. 1: is a simplified top view of a crash management system for a motor vehicle,
- Fig. 2: shows a cross section of a crossbeam of the crash management system of Fig. 1 in a first possible cross section of the crossbeam,
- Fig. 3 to Fig. 9: show modified cross sections of a crossbeam compared to Fig. 2, the individual walls of the crossbeam being partially illustrated in a simplified manner,
- Fig. 10: shows a perspective illustration of a crash test using a crossbeam according to Fig. 2, and
- Fig. 11 and Fig. 12: show a cross section of the crossbeam in the event of a deformation in the crash test according to Fig. 9 during different stages of the collision.

### DETAILED DESCRIPTION OF THE INVENTION

Identical elements or elements having the same function are provided with the same reference signs in the figures.

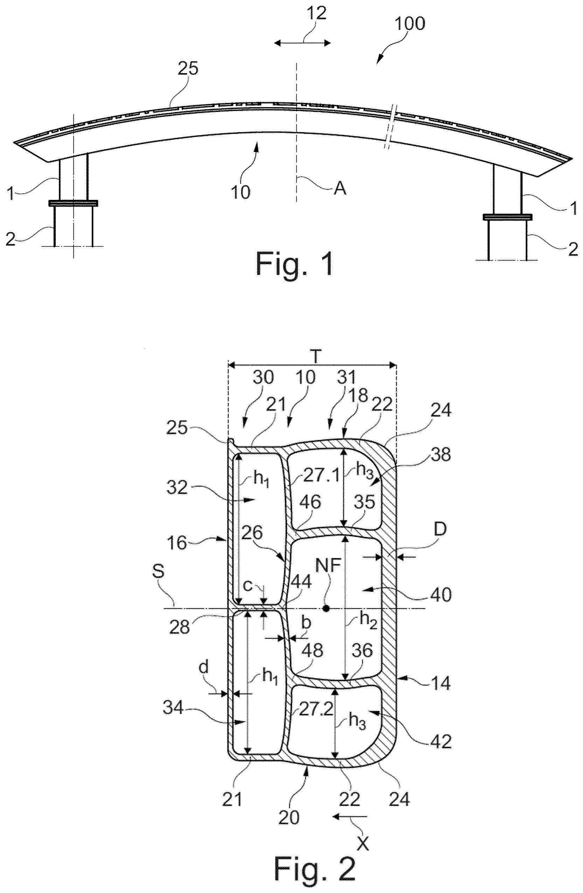

Fig. 1 shows the essential components of a crash management system 100 for a motor vehicle. In the shown exemplary embodiment, crash management system 100 is at the front of the vehicle (otherwise not illustrated); however, said crash management system can also be disposed at the rear of the vehicle. Moreover, the vehicle is in particular configured as an electric vehicle, the use of crash management system 100 not being limited to electric vehicles.

Crash management system 100 comprises a crossbeam 10 which is symmetrical to a center plane A which extends perpendicular to the drawing layer of Fig. 1. Crossbeam 10 is configured as an extruded part and is made of aluminum or an aluminum alloy. In a manner known per se, crossbeam 10 is connected to a body shell structure of the motor vehicle, in particular to longitudinal beams 2, by means of two crash boxes 1 which are preferably disposed at the same lateral distance to center plane A.

In the shown exemplary embodiment, crossbeam 10 is arched with respect to a direction extending perpendicular to longitudinal direction 12 indicated by the double arrow, the curvature being at least approximately constant as an example. Of course, the use of a linear or partially curved crossbeam 10 on crash management system 100 is also part of the scope of the invention.

Fig. 2 shows a first possible cross section of crossbeam 10 in the area of its center plane A. On the side facing the vehicle, the cross section of crossbeam 10 comprises a rear flange 14 which is configured as an at least approximately plane rear flange 14. A rear flange 16, which is also plane, is disposed parallel to rear flange 14, rear flange 14 and front flange 16 being connected to one another by means of two transverse walls 18, 20. As an example, two transverse walls 18, 20, which are configured identically to a symmetry plane S as an example, comprise an at least substantially plane first section 21 on the side facing front flange 16, first section 21 being followed by an arched second section 22. In the transition area from second section 22 to rear flange 14, the cross section of crossbeam 10 has a curvature 24 or a radius. Moreover, front flange 16 has a strip-shaped extension 25 on its upper side facing the road surface, for example. Wall thickness D of rear flange 14 is greater than wall thickness d of front flange 16. For example, wall thickness D is three times wall thickness d. However, wall thickness D can also be 5 times wall thickness d, for example. Furthermore, the cross section of crossbeam 10 has a depth T between the outer sides of rear flange 14 and of front flange 16.

In the exemplary embodiment shown in Fig. 2, the cross section of crossbeam 10 is substantially rectangular. A partition wall 26 is disposed between rear flange 14 and front flange 16 within the cross section of crossbeam 10, partition wall 26 having two partition wall sections 27.1, 27.2 which are slightly arched in the direction of rear flange 14 and which extend at least substantially parallel to rear flange 14 and front flange 16. In the shown exemplary embodiment, partition wall 26 has a wall thickness b which corresponds to wall thickness d of front flange 16.

At the height of symmetry plane S, a first dividing wall 28 is disposed between front flange 16 and partition wall 26 within the cross section of crossbeam 10, first dividing wall 28 extending parallel to two transverse walls 18, 20, in particular parallel to two first sections 21 of transverse walls 18, 20. First dividing wall 28, which is monolithically connected to front flange 16 and partition wall 26, has a wall thickness c which is slightly greater than wall thickness b of partition wall 26 or than wall thickness d of front flange 16.

Partition wall 26 divides the cross section of crossbeam 10 into two planes 30, 31 which are disposed on the side of partition wall 26 facing front flange 16 or rear flange 14. Additionally, first dividing wall 28 divides the cross section of crossbeam 10 in the area of first plane 30 into two chambers 32, 34 which are identical as an example.

In the area of second plane 31 facing rear flange 14, two other dividing walls 35, 36 are disposed within the cross section of crossbeam 10, dividing walls 35, 36 extending symmetrical to symmetry plane S. Two dividing walls 35, 36 are each arched, the curvature extending in the direction of the respective transverse wall 18, 20 facing the curvature more closely. Within second plane 31 of the cross section of crossbeam 10, two dividing walls 35, 36 form three other chambers 38, 40, 42. Both dividing walls 35, 36 facing rear flange 14 have a greater wall thickness than dividing wall 28 facing front flange 16.

While the two chambers 32, 34 disposed in first plane 30 each have a height h₁ in the direction of rear flange 14 or of front flange 16, the (center) chamber 40 has a height h₂ in second plane 31 and the two outer chambers 38, 42 each have a height h₃.

First dividing wall 28 is connected to partition wall 26 at a joint 44. In relation to (center) chamber 40 disposed on the other side of partition wall 26, joint 44 is disposed at a position which corresponds to between 30 % and 70 %, preferably between 40 % and 60 %, in the shown exemplary embodiment 50 % of height h₂ of (center) chamber 40. Additionally, two dividing walls 35, 36 are connected to partition wall 26 in the area of two other joints 46, 48. In relation to height h₁ of two chambers 32, 34 disposed on the other side of partition wall 26, joints 46, 48 are also disposed at between 30 % and 70 %, preferably between 40 % and 60 %, in the shown exemplary embodiment 50 % of height h₁ of respective chamber 32, 34.

As a result of the cross section of crossbeam 10 described above, said crossbeam 10 has a neutral axis NF which geometrically results as the center of mass of the cross section of crossbeam 10 and which is between 20 % and 45 %, preferably between 30 % and 40 % at a depth T of crossbeam 10 in direction X from rear flange 14 in the direction of front flange 16. The greater wall thickness D of rear flange 14 compared to wall thickness d of front flange 16 and the greater the wall thickness of second dividing walls 35, 36 compared to the wall thickness of first dividing wall 28, the more neutral axis NF is displaced in the direction of rear flange 14. The higher number of second dividing walls 35, 36 compared to the (only) first dividing wall 28 also displaces neutral axis NF in the direction of rear flange 14.

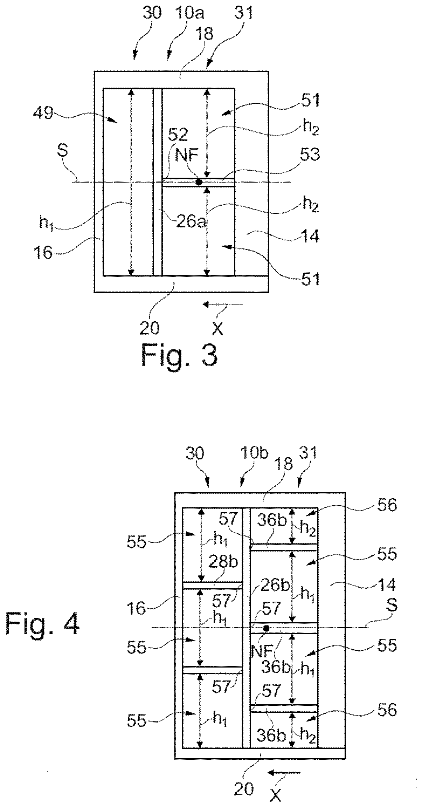

Fig. 3 shows a modified cross section of a crossbeam 10a compared to Fig. 2. Said modified cross section of crossbeam 10a is also characterized by two planes 30, 31 which are separated from one another by a partition wall 26a. However, in contrast to the cross section of crossbeam 10, first plane 30 has only one chamber 49 and second plane 31 has two chambers 51, dividing wall 53 being disposed at the height of symmetry plane S as an example. Chamber 49 has a height h₁ and two chambers, 51 each have a height h₂. Joint 52 of dividing wall 53 at partition wall 26a is located at a height of 50 % of height h₁ of chamber 49 on the side facing chamber 49. Again, neutral axis NF is displaced in the direction of rear flange 14 as a result of the significantly thicker rear flange 14 in relation to front flange 16.

The cross section of crossbeam 10b shown in Fig. 4 also has two planes 30, 31 which have chambers 55, 56 which are separated from one another by partition wall 26b. While first plane 30 has three chambers 55 which have identical height h₁, second plane 31 comprises two chambers 55 which have height h₁ and two chambers 56 which have height h₂ which is approximately half the size of height h₁. Furthermore, chambers 55, 56 are symmetrical to symmetry plane S. It is also essential that, by analogy with crossbeam 10, dividing walls 28b, 36b are each offset to one another, joints 57 between dividing walls 28b, 36b and partition wall 26b thus being disposed at a position in relation to the respective chamber 55, 56 opposite partition wall 26b which is between 30 % and 70 %, preferably between 40 % and 60 %, in the shown exemplary embodiment 50 % of height h₁ of chambers 55.

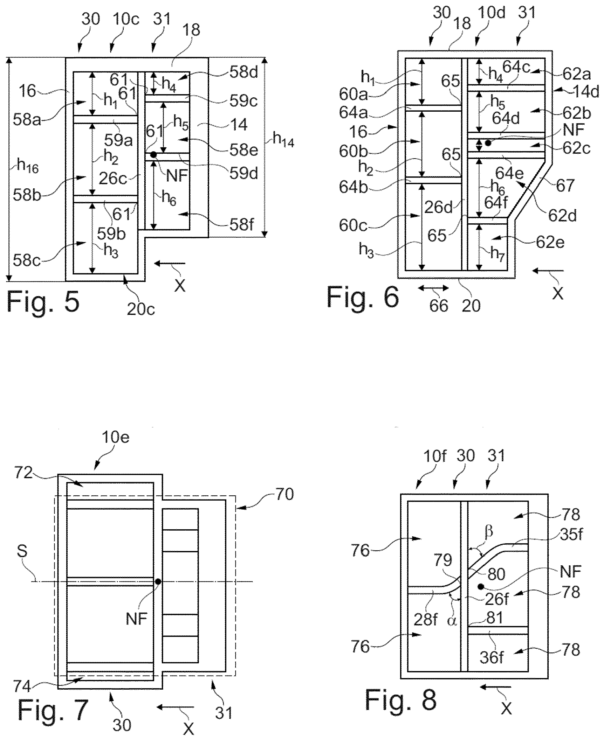

Crossbeam 10c of Fig. 5 has two planes 30, 31 with a total of six chambers 58a to 58f which have different heights h₁ to h₆, for example, three of chambers 58a to 58f being disposed in the area of each of two planes 30, 31. Moreover, dividing walls 59a to 59d are each offset to one another, front flange 16 of crossbeam 10c having a height h₁₆ which is higher than height h₁₄ at rear flange 14. To this end, (lower) transverse wall 20c of crossbeam 10c is step-shaped. By analogy with crossbeams 10, 10a and 10b, dividing walls 59a to 59d are disposed in such a manner in relation to partition wall 26c that joints 61 between dividing walls 59a to 59d and partition wall 26c are disposed at a position in relation to a respective chamber 58a to 58f opposite partition wall 26c which is between 30 % and 70 %, preferably between 40 % and 60 % of height h₁ to h₆.

The cross section of crossbeam 10d shown in Fig. 6 also has two planes 30, 31 which have chambers 60a to 60c and 62a to 62e which have different heights h₁ to h₇, for example. Again, dividing walls 64a to 64f are each offset to partition wall 26d in such a manner that joints 65 are positioned at partition wall 26d according to the embodiments of crossbeams 10, 10a to 10c. While first plane 30 has three chambers 60a to 60c, second plane 31 has five chambers 62a to 62e. Furthermore, the cross section of crossbeam 10d has a different width in the direction extending parallel to transverse walls 18, 20 (indicated by double arrow 66), which is achieved by an oblique section 67 on rear flange 14d.

The cross section of crossbeam 10e according to Fig. 7 corresponds to the cross section of crossbeam 10 rotated by 180° within dashed outlined area 70. However, a chamber 72, 74 is added to the cross section of crossbeam 10e above and below area 70 in the area of first plane 30.

By analogy with crossbeam 10 of Fig. 2, crossbeam 10f shown in Fig. 8 has two planes 30, 31 which have two or three chambers 76, 78 which are separated from one another by partition wall 26f. However, first dividing wall 28f is not plane, but has the form of a bent or of a curved first dividing wall 28f (not shown), as well as dividing wall 35f. As a result, two dividing walls 28f, 35f are connected to partition wall 26f at an oblique angle α, β at their joint 79, 80. Furthermore, two joints 79, 80 are aligned with respect to partition wall 26f. In contrast, dividing wall 36f is configured as a plane dividing wall 36f which is connected to partition wall 26f at joint 81. With respect to the position of joint 81 on partition wall 26f in relation to chamber 76, reference is made to the explanations regarding crossbeams 10, 10a to 10e.

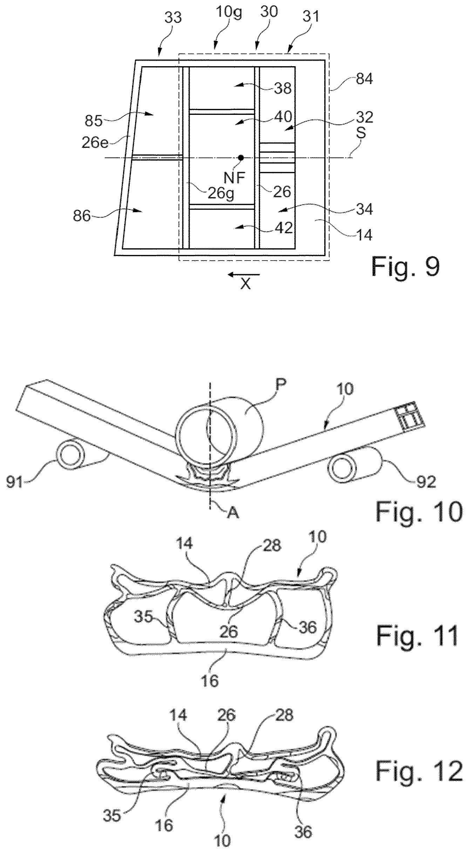

The cross section of crossbeam 10g shown in Fig. 9 is configured by analogy with crossbeam 10 within dashed outlined area 84, but first plane 30 has three chambers 38, 40, 42 and second plane 31 has two chambers 32, 34. Additionally, however, a third plane 33 having two chambers 85, 86 is provided on the side facing oblique front flange 26e by means of another partition wall 26g.

In addition, it is stated that the walls, in particular the partition walls and dividing walls of the cross sections of crossbeams 10a to 10g are each shown as plane or non-arched walls in Figs. 3 to 9 for the sake of simplicity and the transitions between individual wall sections are shown without curves or radii. In practice or preferably, however, arched partition and dividing walls or curves or radii between wall sections are provided, as shown on the cross section of crossbeam 10 according to Fig. 2.

Fig. 10 shows a simplified illustration of a crash test using crossbeam 10. In particular, a pole P which has a round cross section and which is aligned with center plane A of crossbeam 10 is shown as a collision obstacle. In the crash test, crossbeam 10 is supported by two outer elements 91, 92. Figs. 11 and 12, which illustrate the cross section of crossbeam 10 at different points in time of the collision, show that an intended deformation of the cross section of crossbeam 10 is achieved by the specific arrangement of dividing walls 28, 35 and 36 in connection with chambers 32, 34 and 38, 40, 42. In particular, it can be seen that dividing walls 28, 35 and 36 cause a defined, intended deformation of partition wall 26, which prevents crossbeam 10 from being torn apart.

This described crash management system 100 can be altered or modified in various ways without departing from the idea of the invention. However, all cross sections of crossbeam 10; 10a to 10g have in common that neutral axis NF of area cross section of crossbeam 10; 10a to 10g is disposed in the range between 20 % and 45 %, preferably between 30 % and 40 % of depth T of crossbeam 10; 10a to 10g in a direction X extending from rear flange 14; 14d in the direction of front flange 16; 16e. The intended displacement of neutral axis NF in the direction of rear flange 14; 14d is in particular achieved by a greatest possible wall thickness D of rear flange 14; 14d in relation to wall thickness d of front flange 16, 26e and by an increasing number of chambers 32, 38, 40, 42; 49, 51; 55, 56; 58a to 58f; 60a to 60c; 62a to 62e; 72, 74, 76, 78; 85, 86 in the direction of rear flange 14; 14d.

### Reference signs

- 1: crash box
- 2: longitudinal beam
- 10: crossbeam
- 10a - 10g: crossbeam
- 12: longitudinal direction
- 14, 14d: rear flange
- 16, 26e: front flange
- 18: transverse wall
- 20, 20c: transverse wall
- 21: first section
- 22: second section
- 24: curvature
- 25: extension
- 26: partition wall
- 26a - 26d: partition wall
- 26f, 26g: partition wall
- 27.1, 27.2: partition wall section
- 28, 28b, 28f: dividing wall
- 30: plane
- 31: plane
- 32: chamber
- 33: plane
- 34: chamber
- 35, 35f: dividing wall
- 36, 36b, 36f: dividing wall
- 38: chamber
- 40: chamber
- 42: chamber
- 44: joint
- 46: joint
- 48: joint
- 49: chamber
- 51: chamber
- 52: joint
- 53: dividing wall
- 55: chamber
- 56: chamber
- 57: joint
- 58a - 58f: chamber
- 59a - 59d: dividing wall
- 60a - 60c: chamber
- 61: joint
- 62a - 62e: chamber
- 64a - 64f: dividing wall
- 65: joint
- 66: double arrow
- 67: section
- 70: area
- 72: chamber
- 74: chamber
- 76: chamber
- 78: chamber
- 79: joint
- 80: joint
- 81: joint
- 84: area
- 85: chamber
- 86: chamber
- 91,92: element
- 92: element

- 100: crash management system

- A: center plane
- b: wall thickness
- c: wall thickness
- D, d,: wall thickness
- h₁ - h₇: height
- h₁₄: height
- h₁₆: height
- α, β: angle
- P: pole
- S: symmetry plane
- T: depth
- X: direction

## Claims

1. A crash management system (100) for a motor vehicle, the crash management system (100) comprising a crossbeam (10; 10a to 10g) for being connected to a body shell structure of the motor vehicle, the crossbeam (10 ; 10a to 10g) comprising a front flange (16; 26e), a rear flange (14; 14d) and at least two transverse walls (18, 20; 20c) connecting the front flange (16; 26e) to the rear flange (14; 14d) in order to form a closed cross section of the crossbeam (10; 10a to 10e), at least one partition wall (26; 26a to 26d; 26f; 26g) extending at least approximately parallel to the front flange (16; 26e) and/or to the rear flange (14; 14d) being disposed between the front flange (16; 26e) and the rear flange (14; 14d) the crash management system (100) also comprising at least one dividing wall (28; 28b; 28f; 35; 35f; 36; 36b; 36f; 53; 59a to 59d; 64a to 64f) protruding from the front flange (16; 26e) or the rear flange (14; 14d) in the direction of the at least one partition wall (26; 26a to 26d; 26f; 26g) and being connected to the at least one partition wall (26; 26a to 26d; 26f; 26g) at a joint (44, 46, 48; 52; 57; 61; 65; 79 to 81), said dividing wall (28; 28b; 28f; 35; 35f; 36; 36b; 36f; 53; 59a to 59d; 64a to 64f) separating two closed chambers (32, 38, 40, 42; 49, 51; 55, 56; 58a to 58f; 60a to 60c; 62a to 62e; 72, 74, 76, 78; 85, 86) from one another within the cross section of the crossbeam (10; 10a to 10g), at least one, preferably all joints (44, 46, 48; 52; 57; 61; 65; 79 to 81) being disposed in the range between 30 % and 70 % of the height (h₁ to h₇) of the chamber (32, 38, 40, 42; 49, 51; 55, 56; 58a to 58f; 60a to 60c; 62a to 62e; 72, 74, 76, 78; 85, 86) in the direction of the front flange 16; 26e) or of the rear flange (14; 14d) in relation to a chamber (32, 38, 40, 42; 49, 51; 55, 56; 58a to 58f; 60a to 60c; 62a to 62e; 72, 74, 76, 78; 85, 86) disposed on a side of the partition wall (26; 26a to 26d; 26f; 26g) opposite the at least one joint (44, 46, 48; 52; 57; 61; 65; 79 to 81),
**characterized in that**
a neutral axis (NF) of the area cross section of the crossbeam (10; 10a to 10g) is disposed in the range between 20 % and 45 % of the depth (T) of the crossbeam (10; 10a to 10g) in a direction (X) extending from the rear flange (14; 14d) in the direction of the front flange (16; 26e)

2. The crash management system according to claim 1,
**characterized in that**
the neutral axis (NF) is disposed in the range between 30 % and 40 % of the depth (T) of the crossbeam (10; 10a to 10g) in a direction (X) extending from the rear flange (14; 14d) in the direction of the front flange (16; 26e).

3. The crash management system according to claim 1 or 2,
**characterized in that**
the wall thickness (D) of the rear flange (14; 14d) is greater, preferably three times, than the wall thickness (d) of the front flange (16; 26e).

4. The crash management system according to any one of claims 1 to 3,
**characterized in that**
several chambers (32, 38, 40, 42; 55, 56; 58a to 58f; 60a to 60c; 62a to 62e; 72, 74, 76, 78; 85, 86) are disposed on both sides of the at least one partition wall (26; 26b to 26d; 26f; 26g) in a direction extending parallel to the front flange (16; 26e) and/or to the rear flange (14; 14d).

5. The crash management system according to claim 4,
**characterized in that**
the dividing walls (28; 28b; 28f; 35; 35f; 36; 36b; 36f; 59a to 59d; 64a to 64f) separating the chambers (32, 38, 40, 42; 55, 56; 58a to 58f; 60a to 60c; 62a to 62e; 72, 74, 76, 78; 85, 86) from one another are offset to one another in a direction extending parallel to the front flange (16; 26e) and/or to the rear flange (14; 14d).

6. The crash management system according to claim 4 or 5,
**characterized in that**
the number of chambers (32, 38, 40, 42; 55, 56; 60a to 60c; 62a to 62e; 72, 74, 76, 78; 85, 86) disposed on both sides of the at least one partition wall (26; 26b; 26d; 26f; 26g) is different, namely preferably in such a manner that their number differs by one.

7. The crash management system according to claim 6,
**characterized in that**
the number of chambers (32, 38, 40, 42; 55, 56; 58a to 58f; 60a to 60c; 62a to 62e; 72, 74, 76, 78; 85, 86) on the side facing the rear flange (14; 14d) is greater than the number of chambers (32, 38, 40, 42; 55, 56; 58a to 58f; 60a to 60c; 62a to 62e; 72, 74, 76, 78; 85, 86) on the side facing the front flange (16; 26e).

8. The crash management system according to claim 4 or 5,
**characterized in that**
the number of chambers (58a to 58f) disposed on both sides of the at least one partition wall (26c) is approximately the same.

9. The crash management system according to any one of claims 4 to 8,
**characterized in that**
at least one of the dividing walls (28; 28b; 35; 36; 36b; 36f; 53; 59a to 59d; 64a to 64f) is plane and is disposed parallel to at least one transverse wall (18, 20; 20c).

10. The crash management system according to any one of claims 4 to 9,
**characterized in that**
at least one of the dividing walls (28f, 35f) comprises a curved section or a section extending at an oblique angle (α, β) to a partition wall (26f), the oblique section or the curved section ending at the joint (79, 80).

11. The crash management system according to any one of claims 4 to 10, **characterized in that**
at least one of the dividing walls (35, 36) is arched, the curvature protruding to the side having a smaller distance to the transverse wall (18, 20).

12. The crash management system according to any one of claims 1 to 11,
**characterized in that**
the height (h₁₆) of the front flange (16) and the height (h₁₄) of the rear flange (14) are different.

13. The crash management system according to any one of claims 1 to 12,
**characterized in that**
a wall thickness (b) of the at least one partition wall (26; 26a to 26d; 26f; 26g) is smaller than the wall thickness (c) of the at least one dividing wall (28; 28b; 28f; 35; 35f; 36; 36b; 36f; 53; 59a to 59d; 64a to 64f).

14. The crash management system according to any one of claims 1 to 13,
**characterized in that**
the width of the chambers (32, 38, 40, 42; 49, 51; 55, 56; 58a to 58f; 60a to 60c; 62a to 62e; 72, 74, 76, 78; 85, 86) disposed on both sides of the at least one partition wall (26; 26a to 26d; 26f; 26g) is substantially the same.

15. The crash management system according to any one of claims 1 to 14,
**characterized in that**
the crossbeam (10; 10a to 10g) is made of aluminum or an aluminum alloy and is an extruded part.
